(19) Europäisches Patentamt
European Patent Office
Office européen des brevets

(11) **EP 4 438 789 A1**

(12) **EUROPEAN PATENT APPLICATION**
published in accordance with Art. 153(4) EPC

(43) Date of publication:
**02.10.2024 Bulletin 2024/40**

(21) Application number: **23756509.8**

(22) Date of filing: **03.01.2023**

(51) International Patent Classification (IPC):
**D06F 37/22** (2006.01)   **D06F 37/26** (2006.01)
**D06F 39/12** (2006.01)   **F16F 7/09** (2006.01)
**F16F 15/04** (2006.01)   **D06F 37/30** (2020.01)

(52) Cooperative Patent Classification (CPC):
**D06F 37/22; D06F 37/26; D06F 37/30; D06F 39/12;
F16F 7/09; F16F 15/04**

(86) International application number:
**PCT/KR2023/000105**

(87) International publication number:
**WO 2023/158096 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2022   KR 20220021027**

(71) Applicant: **Samsung Electronics Co., Ltd.
Suwon-si, Gyeonggi-do 16677 (KR)**

(72) Inventors:
• **YUN, Jongmin
  Suwon-si, Gyeonggi-do 16677 (KR)**
• **CHOI, Jihoon
  Suwon-si, Gyeonggi-do 16677 (KR)**

(74) Representative: **Walaski, Jan Filip et al
Venner Shipley LLP
200 Aldersgate
London EC1A 4HD (GB)**

(54) **WASHING MACHINE AND METHOD FOR CONTROLLING WASHING MACHINE**

(57)   A washing machine and a method for controlling the washing machine are disclosed. The disclosed washing machine comprises: a case; a tub positioned inside the case; a drum rotatably provided in the tub; and a damper which is provided between the case and the tub, and which reduces vibration transmitted from the drum to the case, wherein the damper includes: a cylinder coupled to one from among the case and the tub; a piston which has least a portion movably inserted into the cylinder and which is coupled to the other from among the case and the tub; a friction member for encompassing at least a portion of the outer peripheral surface of the piston; an elastic member encompassing the friction member, and having an inner periphery that is reduced such that elastic force is applied to the friction member, thereby allowing the friction member to be pressed toward the piston; and a pusher which is in contact with the elastic member, and which spaces the elastic member from the cylinder so as to reduce the elastic force applied by the elastic member to the friction member.

FIG. 5

# Description

[Technical Field]

The present disclosure relates to a washing machine and a method for controlling the washing machine, and more specifically, to a damper included in a washing machine.

[Background Art]

In general, a washing machine is an apparatus that washes laundry by rotating a cylindrical drum containing laundry and wash water at an inside of a tub.

The rotation of the drum may generate vibration and noise, and the vibrations and noise may be transmitted from the drum, through the tub located outside the drum and then through a cabinet that accommodates the tub, to the outside of the washing machine. Since vibration and noise may cause inconvenience to users using the washing machine, a damper that may reduce the vibration and noise of the washing machine may be installed between the tub and the cabinet.

[Disclosure]

[Technical Problem]

One aspect of the present disclosure provides a damper for a washing machine capable of efficiently reducing vibration and noise of the washing machine at a low production cost.

One aspect of the present disclosure provides a damper for a washing machine capable of reducing vibration and noise of the washing machine without impeding the washing performance of the washing machine.

One aspect of the present disclosure provides a damping method for a washing machine capable of quick response.

[Technical Solution]

According to an aspect, there is provided a washing machine including: a case; a tub located inside the case; a drum rotatably provided inside the tub; and a damper provided between the case and the tub and configured to reduce vibration transmitted from the drum to the case, wherein the damper includes: a cylinder coupled to one of the case and the tub; a piston having at least a portion movably inserted into the cylinder, and coupled to another one of the case and the tub; a friction member provided to cover at least a portion of an outer peripheral surface of the piston; an elastic member surrounding the friction member, and having an inner periphery that is reduced to apply an elastic force the friction member, allowing the friction member to be pressed toward the piston; and a pusher in contact with the elastic member, the pusher configured to space the elastic member from the cylinder to reduce the elastic force applied by the elastic member to the friction member.

The elastic member may include a torsion spring, and the torsion spring may include: a cylindrical spring body surrounding the friction member to press the friction member; a first leg bent at a first end, which may be one end of the spring body, and extending in a radially outward direction of the spring body; and a second leg bent at a second end, which is an other end of the spring body, and extending in the radially outward direction of the spring body, wherein the pusher may include a lever portion located between the first leg and the second leg, the lever portion configured to be movable between a first position for pressing the first leg and the second leg to reduce a pressure applied by the spring body to the friction member and a second position for releasing the first leg and the second leg for the spring body to apply a pressure to the friction member.

The damper may further include a supporter configured to contact the lever portion between the first leg and the second leg to support the lever.

A first distance between the supporter and the first leg may be equal to a second distance between the supporter and the second leg.

The lever portion may include: a first contact portion configured to contact the first leg to press the first leg in a direction away from the second leg; a second contact portion configured to contact the second leg to press the second leg in a direction away from the first leg; and a supporter contact portion configured to contact the supporter.

The damper may further include a motor configured to rotate the pusher, and a motor arm coupled to a rotation shaft of the motor and rotated by the motor to move the lever portion to one of the first position and the second position, the motor arm extending in a radially outward direction of the rotation axis of the motor, wherein the pusher may include: an extension portion extending from one end of the lever portion toward the motor arm; and an arm coupling portion at an end of the extension portion configured to be coupled to the motor arm.

In a transient stage in which a rotation speed of the drum gradually increases or decreases, the lever portion may be disposed in the second position such that the torsion spring may exert a pressure on the friction member, and in a normal stage in which the rotation speed of the drum remains constant, the lever portion may be disposed in the first position such that a pressure exerted on the friction member by the torsion spring may be reduced.

The washing machine may further include a spring housing provided outside the torsion spring to protect the torsion spring, the spring housing having an inner extension portion to prevent the torsion spring from being separated to an outside, wherein the spring housing may include a first spring housing including a surface facing the piston, and a second spring housing that may be coupleable to the first spring housing and including a surface facing the piston such that the torsion spring may be assembled inside the spring housing.

The spring housing may include: a first leg guide formed to correspond to a path, along which the first leg moves, to guide a movement of the first leg, and allowing the first leg to pass therethrough; and a second leg guide formed to correspond to a path, along which the second leg may move, to guide a movement of the second leg, and allowing the second leg to pass therethrough.

The torsion spring may include: a first leg extension portion bent at an end of the first leg and extending toward the piston; and a second leg extension portion bent at an end of the second leg and extending toward the cylinder, wherein the spring housing may include: a first wing extending from one end of the spring housing in a radially outward direction, and including a first extension portion guide to guide the first leg extension portion; and a second wing extending from an other end of the spring housing in a radially outward direction, and including a second extension portion guide to guide the second leg extension portion.

The torsion spring include: a first leg extension portion bent at an end of the first leg and extending toward the piston; and a second leg extension portion bent at an end of the second leg and extending toward the cylinder, wherein the pusher may further include a bent portion bent at one end of the lever portion adjacent to the first leg, and extending between the first leg extension portion and the spring housing.

The bent portion may extend to include a movement gap between the first leg and the bent portion such that the pusher may be movable in a direction toward the cylinder when the lever portion may move from the second position to the first position.

The second wing may be formed to extend from an end of the spring housing oriented toward the cylinder in a circumferential direction of the spring housing, and the cylinder may include: a plurality of wing guides extending from an outer side of an end portion of the cylinder oriented toward the spring housing in a circumferential direction of the cylinder; and a wing groove formed between the plurality of wing guides and having a size corresponding to the second wing.

The motor may include a locking protrusion protruding in a lateral direction, and the cylinder may include: an insertion hole into which the motor is inserted; and a locking groove at an inner periphery of the insertion hole, recessed inward of the cylinder and having a size corresponding to the locking protrusion to prevent the motor from passing through the cylinder.

The motor may be located inward of a position at which the piston may be maximally inserted in the cylinder to prevent the motor from interfering with the piston inside the piston.

There is provided a washing machine including: a case; a tub located inside the case; a drum rotatably coupled to the tub; a drive motor configured to rotate the drum; and a damper provided between the case and the tub, and configured to reduce vibration transmitted to the tub, wherein the damper includes: a cylinder coupled to one of the case and the tub; a piston movably inserted into the cylinder and coupled to another one of the case and the tub; a friction member provided to cover an outer peripheral surface of at least a portion of the piston; an elastic member surrounding the friction member from the outside of the friction member, the elastic member configured to, upon a decreasing distance between an outer portion of the piston and an entirety of an inner portion of the elastic member provided at a position corresponding to the outer portion of the piston, apply an elastic force to the friction member to allow the friction member to press the piston; a pusher in contact with the elastic member, configured to further space the elastic member from the cylinder to prevent the elastic member from pressing the friction member; a motor configured to move the pusher; and a controller configured to control the motor based on a rotation speed of the drum, wherein the controller controls the motor for the pusher is movable to one of a first position in which a pressure exerted by the elastic member on the friction member is reduced and a second position in which a pressure exerted by the elastic member on the friction member is released

The elastic member may include a torsion spring, and the torsion spring may include: a cylindrical spring body surrounding the friction member to press the friction member; a first leg bent at a first end, which may be one end of the spring body, and extending in a radially outward direction of the spring body; and a second leg bent at a second end, which is another end of the spring body, and extending in the radially outward direction of the spring body, wherein the pusher may include a lever portion located between the first leg and the second leg, wherein the first position is a position for pressing the first leg and the second leg to reduce a pressure applied by the spring body to the friction member, and the second position is a position for releasing the first leg and the second leg for the spring body to press the friction member.

In a transient stage in which a rotation speed of the drum gradually increases or decreases, the controller may allow the pusher to be located in the second position such that the torsion spring exerts a pressure on the friction member, and in a normal stage in which a rotation speed of the drum remains constant, allow the pusher to be located in the first position to reduce the pressure exerted by the torsion spring on the friction member.

There is provided a method of controlling a washing machine including a damper for reducing vibration transmitted from a drum and a motor for adjusting the friction force of the damper, the method including checking a rotation speed of the drum; in a transient stage in which the rotation speed of the drum gradually increases or decrease, controlling the motor to increase a friction force of the damper, and in a normal stage in which the rotation speed of the drum remains constant within a predetermined range, controlling the motor to reduce the friction force of the damper.

The checking of the rotation speed of the drum includes receiving a signal generated to control the rotation speed of the drum, and checking the rotation speed.

[Advantageous Effects]

According to one aspect of the disclosure, as disclosed above, according to the present disclosure, a damper includes an elastic member that allows a friction member surrounding a piston to be pressed toward the piston to perform a damping force, thereby efficiently reducing vibration and noise of the washing machine at low production cost.

According to the present disclosure, a damper includes a pusher that may further space an elastic member from a cylinder to reduce the elastic force exerted by the elastic member on a friction member to adjust the elastic force, such that damping is not performed in a section in which damping is not required, thereby reducing the vibration and noise of the washing machine without impairing the washing performance of the washing machine.

According to the present disclosure, a controller capable of controlling a damper receives a signal generated to control a rotation speed of a drum and control the damper based on the signal, thereby rapidly controlling the damping of the washing machine.

[Description of Drawings]

FIG. 1 is a perspective view illustrating a washing machine according to an embodiment of the present disclosure.

FIG. 2 is a cross-sectional view illustrating the washing machine shown in FIG. 1, with the washing machine cut in half.

FIG. 3 is a conceptual diagram illustrating a damper of the washing machine shown in FIG. 1.

FIG. 4 is a perspective view illustrating the damper of the washing machine shown in FIG. 1.

FIG. 5 is an exploded perspective view illustrating the damper of the washing machine shown in FIG. 4.

FIG. 6 is a cross-sectional view illustrating the damper of the washing machine shown in FIG. 4, with the damper cut in half.

FIG. 7 is a graph illustrating the relationship between a damper state of the damper of the washing machine shown in FIG. 4 and an angular velocity of the drum.

FIG. 8 is a front view illustrating the damper of the washing machine of FIG. 4 when the damper is in a second state.

FIG. 9 is a front view illustrating the damper of the washing machine of FIG. 4 when the damper is in a first state.

FIG. 10 is an enlarged front view illustrating part A of the damper of the washing machine shown in FIG. 7.

FIG. 11 is an enlarged perspective view of the damper of the washing machine shown in FIG. 9, viewed at a different angle from that of FIG. 9.

FIG. 12 is a perspective view illustrating only a friction member, an elastic member, and a pusher in the damper of the washing machine shown in FIG. 4.

FIG. 13 is a top plan view illustrating the friction member, the elastic member, and the pusher shown in FIG. 11.

FIG. 14 is a conceptual diagram for describing the operating principle of the damper of the washing machine shown in FIG. 7.

FIG. 15 is a graph illustrating the relationship between LID and the front-to-back leg load ratio shown in FIG. 13.

FIG. 16 is a graph illustrating the relationship between LID and the load transfer proportion of the front leg shown in FIG. 13.

FIG. 17 is a diagram illustrating a result of a simulation experiment to verify an operation of the damper of the washing machine shown in FIG. 4.

FIG. 18 is a flow chart illustrating the sequences of the damper states of the washing machine shown in FIG. 4.

FIG. 19 is an enlarged perspective view illustrating part B of FIG. 5, which shows a motor insertion hole in detail.

FIG. 20 is an enlarged cross-sectional view of part B shown in FIG. 5, which is cut in half to show the motor insertion hole in detail.

FIG. 21 is an enlarged perspective view illustrating a damper of a washing machine according to an embodiment of the present disclosure.

[Modes of the Disclosure]

Embodiments described in the specification and configurations shown in the accompanying drawings are merely exemplary examples of the disclosure, and various modifications may replace the embodiments and the drawings of the disclosure at the time of filing of the present application.

Further, identical symbols or numbers in the drawings of the disclosure denote components or elements configured to perform substantially identical functions.

Further, terms used herein are only for the purpose of describing particular embodiments and are not intended to limit to the disclosure. The singular form is intended to include the plural form as well, unless the context clearly indicates otherwise. It should be further understood that the terms "include," "including," "have," and/or "having" specify the presence of stated features, integers, steps, operations, elements, components, and/or groups thereof, but do not preclude the presence or addition of one or more other features, integers, steps, operations, elements, components, and/or groups thereof.

Further, it should be understood that, although the terms "first," "second," etc. may be used herein to describe various elements, the elements are not limited by the terms, and the terms are only used to distinguish one element from another. For example, a first element could be termed a second element, and similarly, a second element could be termed a first element without departing from the scope of the disclosure. The term "and/or" includes combinations of one or all of a plurality of associated listed items.

Meanwhile, the terms "upper-lower direction," lower side" and "front-rear direction" used herein are defined based on the drawings, and the shape and position of each element are not limited by the terms.

Hereinafter, embodiments according to the disclosure will be described in detail.

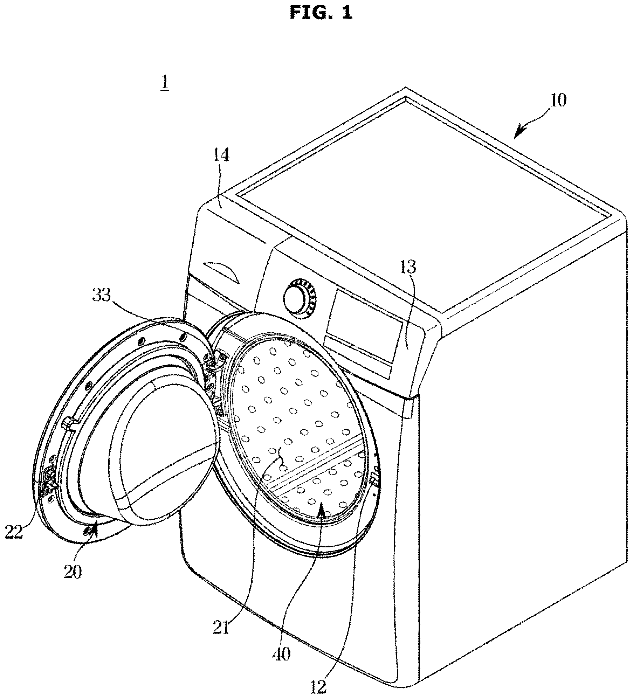

FIG. 1 is a perspective view illustrating a washing machine according to an embodiment of the present disclosure.

Referring to FIG. 1, a washing machine 1 may include a case 10 that constitutes the exterior thereof. An inlet 21 may be provided at the front of the case 10 to allow laundry to be introduced into a drum 40. The inlet 21 may be opened and closed by a door 20 installed on the front of the case 10.

In other words, the door 20 may be rotatably coupled to the case 10 to open and close the inlet 21. A hinge 23 may be coupled to one side of the door 20, and coupled to the case 10 at a side thereof that is not a side coupled to the door 20, thereby allowing the door 20 to be rotatably coupled to the case 10.

The door 20 may include a latch 22 extending from a rear side of door 20. The case 10 may include a latch accommodating portion 12 formed to correspond to the latch 22. Since the latch 22 is accommodated in the latch accommodating portion 12 and fixed, during operation of the washing machine 1 while the door 20 is closed, the door 20 may be locked and prevented from being opened.

A control panel 13 may be provided on a front upper portion of the case 10 such that the user may manipulate the operation of the washing machine 1.

A detergent box 14 may be provided on a front upper portion of the case 10 such that the user may put detergent required for washing laundry.

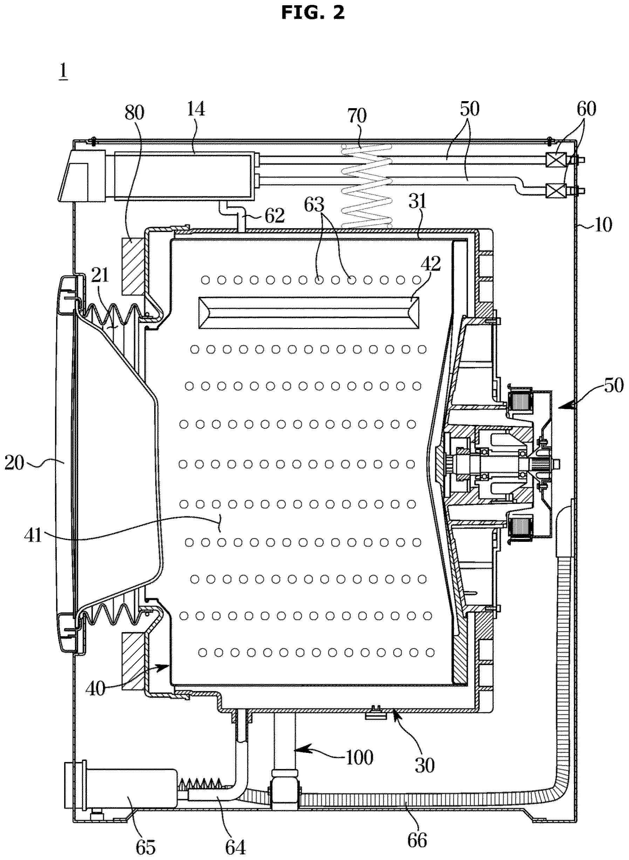

FIG. 2 is a cross-sectional view illustrating the washing machine shown in FIG. 1, with the washing machine cut in half.

Referring to FIG. 2, the washing machine 1 may include a tub 30 provided inside the case 10.

A drum 40 may be provided inside the tub 30. The drum 40 may be coupled to a drive motor 50 at the rear side, and the drive motor 50 may be coupled to the tub 30. Accordingly, the tub 30 and the drum 40 may be coupled to each other.

The drum 40 may be provided with a laundry room 41 at an inside thereof in which laundry may be stored. When the drive motor 50 rotates, the drum 40 connected thereto may rotate while the tub 30 may not rotate.

Laundry located inside the laundry room 41 may be lifted and dropped, to thereby be washed. A lifter 42 extending in the front-back direction and protruding toward the inside of the drum 40 may be provided on an inner peripheral surface of the drum 40 to lift laundry.

Upon a water supply valve 60 being opened, wash water for washing laundry may move a detergent box 14 through a water supply pipe 61. The wash water moved to the detergent box 14 may move to the inside the tub 30 through a connection pipe 62. Since the drum 40 is provided with through holes 63, the wash water moved to the tub 30 may move to the inside the drum 40. The water moved to the drum 40 may move back to the tub 30. The wash water moved to the tub 30 may move to a drain pump 65 through a connection hose 64. The wash water moved to the drain pump 65 may be discharged to the outside of the washing machine 1 through a drain hose 66 by a pressure applied by the drain pump 65.

The washing machine 1 may include a tub spring 70 that connects the tub 30 and the case 10. The tub spring 70 may connect an upper side of the tub 30 and an inner upper side of the case 10.

The washing machine 1 may include a damper 100 connecting the tub 30 and the case 10. The damper 100 may connect a lower side of the tub 30 and an inner lower side of the case 10.

That is, the tub 30 may be coupled to the case 10 by the tub spring 70 and the damper 100.

As described above, the drum 40 may be rotated inside the tub 30 by the drive motor 50. When the drum 40 rotates, vibration and noise may occur. Vibration and noise may cause discomfort to users, so it may be required to reduce the vibration and noise.

When vibration and noise transmitted from the drum 40 to the tub 30 are transmitted to the case 10, the vibration and noise may pass through the tub spring 70 and the damper 100. Since the tub spring 70 may include an elastic body capable of elasticity and damping functions, noise transmitted to the case 10 may be reduced.

A balancer 80 having a weight may be located on the front of the tub 30. Generally, the drive motor 50 is provided at the rear of the washing machine 1. Due to the weight of the drive motor 50 and the laundry, the drum 40 may have the center of gravity shifted to the rear side. When the center of gravity is shifted, the rotation axis of the drum 40 and the center of gravity of the drum 40 may be misaligned, which may cause vibration and noise in the drum 40. Therefore, a balancer 80 corresponding to the imbalance may be added to the front of the tub 30.

The tub 30 and case 10 are connected also by the damper 100 located at the bottom. The damper 100 may perform a damping function to attenuate vibration transmitted from the drum 40 through the tub 30. In other words, the damper 100 may attenuate vibration and noise by dissipating vibration energy generated in the drum 40.

The damper 100 will be described in detail below.

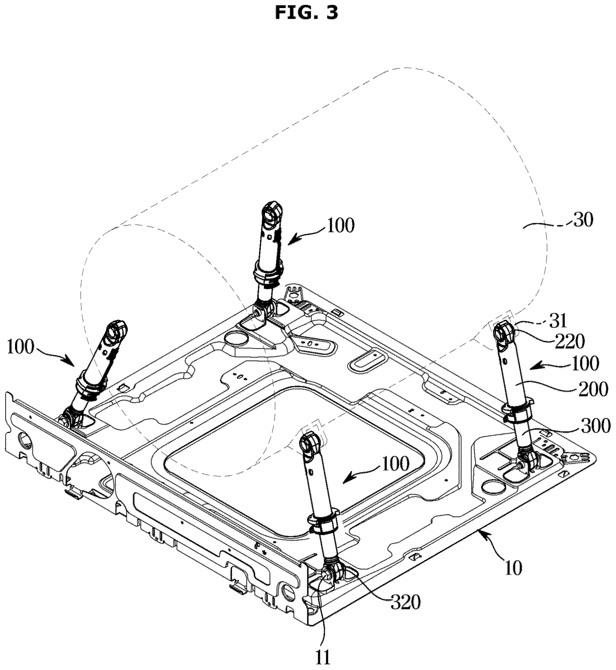

FIG. 3 is a conceptual diagram illustrating a damper of the washing machine shown in FIG. 1.

Referring to FIG. 3, the damper 100 may be provided between the tub 30 and the lower side of the case 10.

The dampers 100 may be provided in pairs on the left and right sides, as well as in pairs on the front and rear sides.

When the lower surface of the case 10 is provided in a quadrangular shape, the damper 100 may be provided at a position corresponding to each vertex of the quadrangle. However, for convenience of description, the dampers 100 may be illustrated as four dampers, but the damper 100 may be provided as a single damper, and the number of dampers 100 is not limited thereto.

The damper 100 may include a cylinder 200 and a piston 300 having at least a portion movably inserted into the cylinder 200. When vibration occurs due to rotation of the drum 40 accommodated inside the tub 30, the vibration may be transmitted to the tub 30. Since vibration is a change in displacement of an object, the occurrence of vibration in the tub 30 represents a change in displacement of the tub 30. In this case, since the tub 30 is connected to the case 10 by the damper 100, and the damper 100 includes the cylinder 200 and the piston 300 movably coupled to the cylinder 200, a change in displacement of the tub 30 may be understood as causing a change in the relative positions of the cylinder 200 and the piston 300.

In this case, when a configuration that dissipates energy due to the relative motion of the cylinder 200 and the piston 300, such as a friction member 400, is provided between the cylinder 200 and the piston 300, the vibration energy transmitted to the tub 30 may be reduced by the configuration.

For reference, a process of reducing vibration energy may be referred to as damping.

Also, for reference, depending on the configuration dissipating the energy, the type of damper 100 may be determined. The configuration that dissipates the energy may be an MR fluid, a friction member 400, or other configurations capable of dissipating energy. Hereinafter, the friction member 400 is described as an example, but it should be understood that the present disclosure is not limited thereto.

The damper 100 may include a first fixing portion 320 formed on a side coupled to the case 10 and a second fixing portion 220 formed on a side coupled to the tub 30.

The cylinder 200 and the piston 300 do not need to be coupled for one to be coupled to the tub 30 and the other to the case 10. Accordingly, the cylinder 200 may be coupled to the tub 30, and the piston 300 may be fixed to the case 10, or vice versa. Hereinafter, for convenience of description, the cylinder 200 is described as being coupled to the tub 30, and the piston 300 is described as being coupled to the case 10.

As described above, the first fixing portion 320 may be included in the cylinder 200, and the second fixing portion 220 may be included in the piston 300.

The first fixing portion 320 may be formed at an end portion of the cylinder 200 on a side in which the piston 300 is not located, to enhance the spatial efficiency. Unless the first fixing portion 320 is provided at the end portion of the cylinder 200, a portion extending outside of the first fixing portion 320 may occupy a space provided between the tub 30 and the case 10, and thus the space between the tub 30 and the case 10 may not be used efficiently.

Accordingly, the second fixing portion 220 may be provided at the end portion of the cylinder 200 on the side in which the piston 300 is not located.

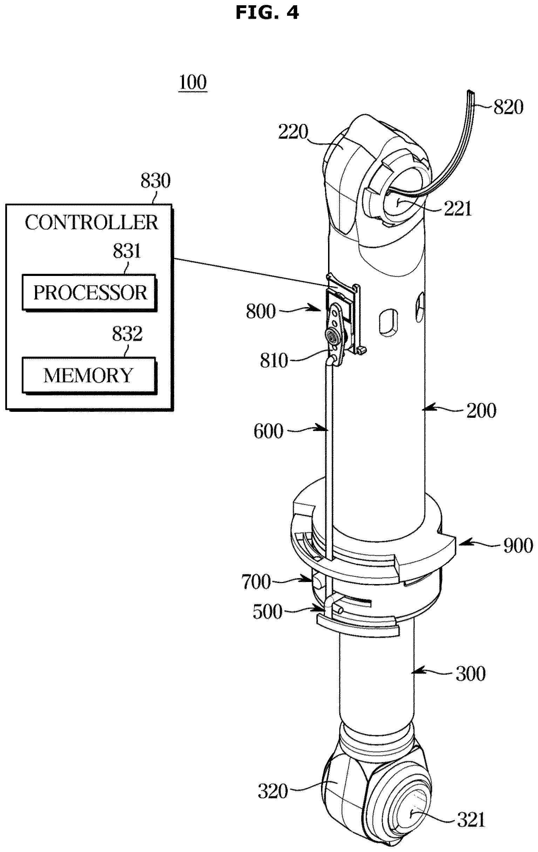

The first fixing portion 320 may be coupled to a damper fixing portion 11 provided on the bottom surface of the case 10. The damper fixing portion 11 may include two protruding shapes having holes and a bar shape passing between the holes. The first fixing portion 320 may include a first fixing hole (321 in FIG. 4). Therefore, the first fixing hole 321 provided in the first fixing portion 320 and the holes provided in the protruding shapes of the damper fixing portion 11 are aligned, and passed by the bar shape of the damper fixing portion 11, thereby coupling the first fixing portion 320 to the damper fixing portion 11.

Through the coupling, the damper 100 may be allowed to rotate using the bar-shaped portion of the damper fixing portion 11 as a rotation axis.

The second fixing portion 220 may include a damper coupling portion 31 provided in the tub 30. The second fixing portion 220 may include a second fixing hole (221 in FIG. 4). Since the damper coupling portion 31 includes a shape similar to the damper fixing portion 11 described above, the damper 100 may perform a rotational movement using the bar shape of the damper fixing portion 11 as a rotation axis.

Hereinafter, the damper 100 is described in detail.

FIG. 4 is a perspective view illustrating the damper of the washing machine 1 shown in FIG. 1.

Referring to FIG. 4, the damper 100 may include a cylinder 200 and a piston 300 having a portion movably inserted into the cylinder 200.

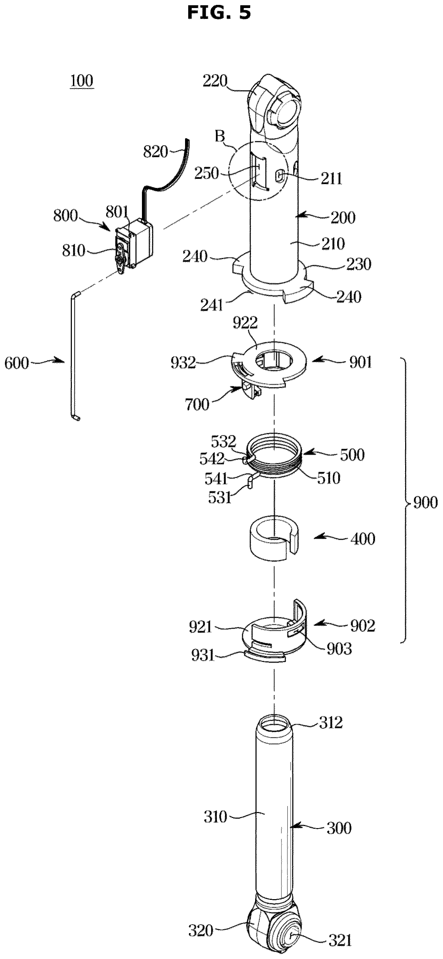

A spring housing 900 may be provided on a side of the cylinder 200 oriented toward the piston 300. The spring housing 900 may accommodate a friction member (400 in FIG. 5) and an elastic member (500 in FIG. 5) described with reference to FIG. 5.

A pusher 600 may be included to control the elastic member 500. The pusher 600 may contact the elastic member 500 and space the elastic member 500 away from the cylinder 200 to reduce the elastic force applied by the elastic member 500 to the friction member 400. This will be described in more detail below.

A motor 800 may be provided at one side of the cylinder 200 in which the second fixing portion 220 is provided. The motor 800 may include a motor arm 810 on a rotation shaft thereof. The motor arm 810 may be coupled to one end of the pusher 600 to assist the motor 800 in controlling the pusher 600. The motor 800 may be connected to a power source through a motor wire 820 to receive power.

Additionally, the motor 800 may be connected to a controller 830 that controls the motor 800. The controller 830 may control the rotation of the motor 800, and by the rotation of the motor 800, control the rotation of the motor arm 810 coupled to the motor 800. Since the motor arm 810 is coupled to the pusher 600, controlling the motor arm 810 represents controlling the pusher 600. The pusher 600 may contact the elastic member 500 and control the movement of the elastic member 500 by the pusher 600. As will be described in detail below, the elastic member 500 may control the frictional force applied by the friction member (FIG. 5, 400) to the cylinder 300. In summary, the controller 830 may control the frictional force applied by the friction member 400 to the cylinder 300.

The controller 830 may include at least one memory 832 that stores programs and various data for performing operations described below, and at least one processor 831 that executes the stored programs.

When a plurality of memories 832 and a plurality of processors 831 are provided, the plurality of memories 832 and the plurality of processors 831 may be integrated on one chip or may be physically separated. In the embodiment of the washing machine 1, there are no restrictions on the physical locations of the memory 832 and the processor 831.

Hereinafter, the configuration of the damper 100 is described in more detail.

FIG. 5 is an exploded perspective view illustrating the damper 100 of the washing machine 1 shown in FIG. 4.

Referring to FIG. 5, the damper 100 includes a cylinder 200, a piston 300 that may be inserted into the cylinder 200, a friction member 400 that may apply a frictional force to the piston 300, and an elastic member 500 that may allow the friction member 400 to be pressed toward the piston 300.

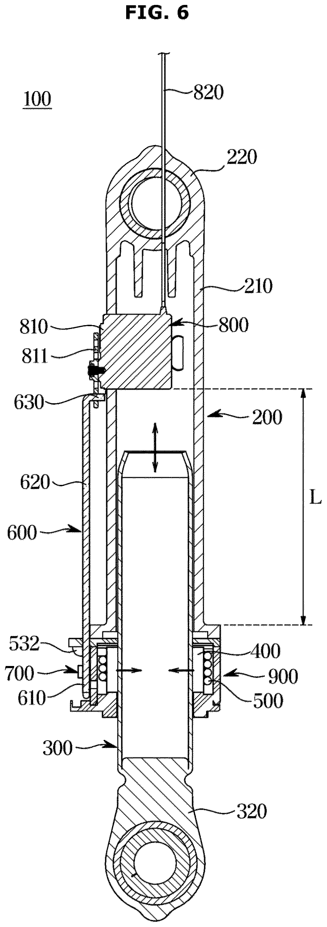

The cylinder 200 may include a cylinder body 210 in a cylindrical shape. The cylinder body 210 may include a piston accommodation space (311 in FIG. 6) on the inside.

When the piston 300 is inserted into the piston accommodation space 311, air in the piston accommodation space 311 of the cylinder 200 may be compressed. When air is compressed, the pressure of the air increases, and the damper 100 may not function as desired. To prevent this phenomenon, a cylinder through hole 211, 63 that may communicate with air outside the damper 100 may be formed on one side of the cylinder 200. In order to properly perform the above function, the cylinder through hole 211 needs to be formed further inward than the position in which the piston 300 may be maximally inserted. This is because, when the cylinder through hole 211 is blocked by the cylinder 200, the cylinder through hole 21 has a difficulty in functioning.

In other words, the cylinder through hole 211 may be formed in the cylinder body 210 that forms the body of the cylinder 200.

The piston 300 may include a piston body 310 in a cylindrical shape. The piston body 310 may be a rigid body with a filled interior. When the piston body 310 is rigid, the strength increases, resulting in a structure resistant to impact. On the other hand, when the piston body 310 is in a cylindrical shape with a hollow interior, the piston body 310 may have a weaker strength than a structure filled with a rigid body, but may be lighter and lower in the unit cost. There are no restrictions on the shape of the piston, but for convenience of description, a cylindrical piston body 310 is assumed and described.

To facilitate insertion into the cylinder 200, the piston 300 may include a cylinder head 312 that is tapered such that a side oriented toward the cylinder 200 has a smaller diameter than the piston body 310. Such a configuration of the cylinder head 312 results in a significant difference between the diameter of a side of the piston 300 oriented toward the cylinder 200 and the diameter of a side of the cylinder 200 oriented toward the piston 300. Therefore, the piston 300 may be easily inserted into the cylinder 200.

The friction member 400 may cover at least a portion of the outer peripheral surface of the piston 300. When the friction member 400 covers the entire outer peripheral surface of the piston 300, it may be difficult to effectively reduce the inner periphery of the friction member 40 in a process of applying a frictional force to the piston 300 by reducing the inner periphery of the friction member 400, and there is a risk of the friction member 400 being deformed. On the other hand, when the friction member 400 covers only a portion of the outer peripheral surface of the piston 300, a radial displacement may be effectively made without a concern of the friction member 400 being deformed, and thus a section, in which the piston 310 is not covered by the friction member 400, may be reduced, thereby applying a friction force to the piston 300.

The elastic member 500 is not limited to any shape or type as long as it can apply a force in a direction in which the friction member 400 contacts the cylinder 200. However, in a case in which the elastic force is applied only in one direction of the friction member 400 and the elastic force is applied to only one side of the cylinder 200, a one-sided force may be applied with respect to the axis of the cylinder 200. In this case, since the force is applied only to one side of the cylinder 200, the cylinder 200 may be bent in the direction in which the force is applied.

In order to prevent the above limitation, the elastic member 500 may be provided to surround the friction member 400. Additionally, the elastic member 500 may be provided to surround the cylinder 200. The elastic member 500 may apply an elastic force in a direction from the outside of the friction member 400 to the inside of the friction member 400. As a result, the entire surface of the friction member 400 may apply an external force to the cylinder 200. In addition, since the elastic member 500 is provided to surround the cylinder 200 even when the friction member 400 covers only a portion of the piston 300, an elastic force may be applied to the entire outer surface of the cylinder 200. Accordingly, the cylinder 200 may not be subject to a biased-force in any direction with respect to the axis of the cylinder 200. Accordingly, the cylinder 200 may be prevented from bending.

The elastic member 500 is located surrounding the friction member 400 or the cylinder 200, and in order to apply an elastic force to the friction member 400, the elastic member 500 may apply an elastic force by a method of reducing the inner periphery of the elastic member 500.

The elastic member 500 applying an elastic force by reducing the inner periphery may be provided in the form of a rubber ring. In the following embodiment, for convenience of description, the elastic member 500 is described as having the form of a torsion spring 500.

To summarize the above, the friction member 400 may be pressed to generate friction between the friction member 400 and the cylinder 200 such that the damper 100 may perform a damping function. Since a method of dissipating vibration energy generated in the drum 40 is implemented using the friction member 400 and the torsion spring 500, which have low unit costs, the overall manufacturing cost of the damper 100 may be reduced. In other words, the vibration and noise of the washing machine 1 may be efficiently reduced at a low manufacturing cost.

The damper 100 is considered to dissipate the energy of the drum 40. From the perspective of efficient use of energy, a method of using a damper may not be a good method because it causes waste of energy. In order to use the damper 100 for reducing the vibration and noise of the washing machine 1, the damper 100 may be prevented from damping in a section in which significant vibration and noise do not occur in the washing machine 1, thereby reducing energy waste while minimizing vibration and noise.

The section in which significant vibration occurs in the washing machine 1 may be a section in which resonance occurs because the rotation speed of the drive motor 50 coincides with the natural frequency of the washing machine 1. In general, the primary natural frequency of the washing machine 1 is low due to large and heavy structures, such as the tub, the balancer, the motor, etc., resulting in a large amplitude.

The drum 40, while the vibration frequency is increasing by rotation of the drum 40, passes through the resonance frequency region of the washing machine 1. While passing through the resonance frequency range of the washing machine 1, the amplitude greatly increases due to resonance, and significant vibration and noise may occur, and such a significant vibration and noise may occur even while the rotation speed of the drum 40 is decreasing in a process of entering a stop state.

On the other hand, in a state in which the vibration frequency of the drum 40 has already increased and remains at a constant frequency, that is, the drum 40 has already passed through the resonance frequency range of the washing machine 1, less vibration and noise may be generated. Alternatively, vibration and noise may not occur in a stop state in which the drum 40 does not rotate.

Accordingly, it may be considered that in a transient state in which the vibration frequency of the drum 40 increases or decreases, resonance is transmitted to the case 10, and the amplitude of the vibration of the case 10 increases, resulting in significant vibration and noise. In addition, in a steady state in which the vibration frequency of the drum 40 is constant, relatively less vibration and noise are generated compared to the former. In general, when resonance does not occur in the case 10, the case 10 has vibration and noise at a level that does not cause significant inconvenience to the user.

Accordingly, there is a need for the damper 100 to perform a damping function in a transient state in which the vibration frequency of the drum 40 increases or decreases. This is because vibration and noise needs to be reduced. However, in a normal state in which the vibration frequency of the drum 40 is constant, the damper 100 does not need to perform a damping function. Rather, when the damper 100 performs a damping function in this section, the rotational energy of the drum 40 may be lost, interfering with the efficient operation of the washing machine 1.

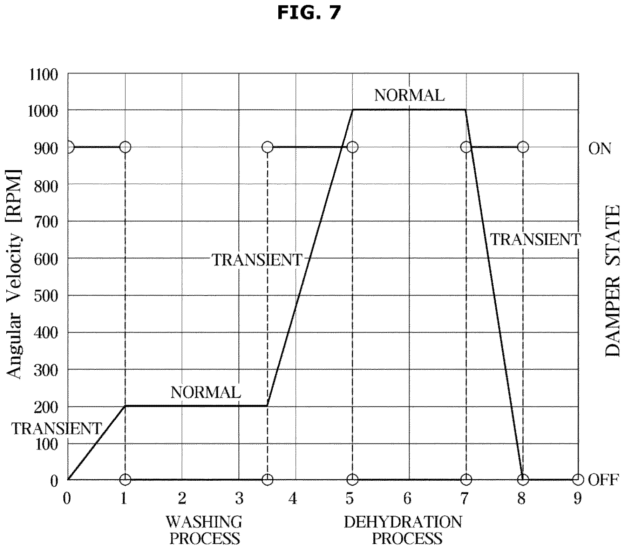

In view of the above, the damper 100 need to perform a damping function in a transient state in which the rotation speed of the drum 40 changes, and not perform a damping function in a normal state in which the rotation speed of the drum 40 is constant (see FIG. 7).

In order to implement the above described function, a pusher 600 may be included.

First, the torsion spring 500 may include a spring body 510, which is a body. The spring body 510 may be a part that surrounds the friction member 400 and has a cylindrical shape.

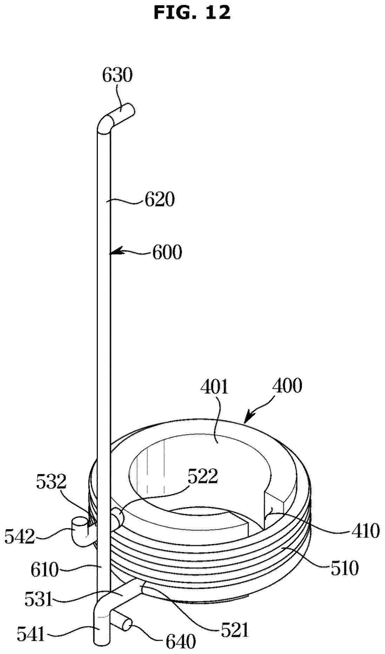

Since the torsion spring 500 is formed by winding one wire in one direction, the torsion spring 500 may have two end portions. In this case, one of the end portions located on a side adjacent to the piston 300 may be referred to as a first end portion (521, in FIG. 12). The other end portion located on a side adjacent to the cylinder 200 may be referred to as a second end portion (522, in FIG. 12).

The torsion spring 500 may include a first leg 531 that is bent at the first end portion 521 and extended radially outward from the spring body 510. Additionally, the torsion spring 500 may include a second leg 532 that is bent at the second end portion 522 and extended radially outward from the spring body 510.

The pusher 600 for adjusting the elastic force of the torsion spring 500 may be placed between the first leg 531 and the second leg 532. The pusher 600 may have the shape of a long bar extending to one side. When the pusher 600 placed between the first leg 531 and the second leg 532 rotates in one direction, the first leg 531 and the second leg 532 move apart from each other, thereby weakening the elastic force applied by the torsion spring 500 to the friction member 400. As a result, the pressure applied by the friction member 400 to the cylinder 200 may be lowered, thereby weakening the frictional force applied by the friction member 400 to the cylinder 200. That is, the damping function of the damper 100 may be limited.

In order to rotate the pusher 600, the damper 100 may include a motor 800. The motor 800 may be coupled to one end of the pusher 600 to rotate the pusher 600. More specifically, the one end of the pusher 600 may be rotatably coupled to a motor arm hole (811 in FIG. 6) formed in the motor arm 810 coupled to the rotation shaft of the motor 800 such that the pusher 600 may be rotated through the rotational force generated by the motor 800.

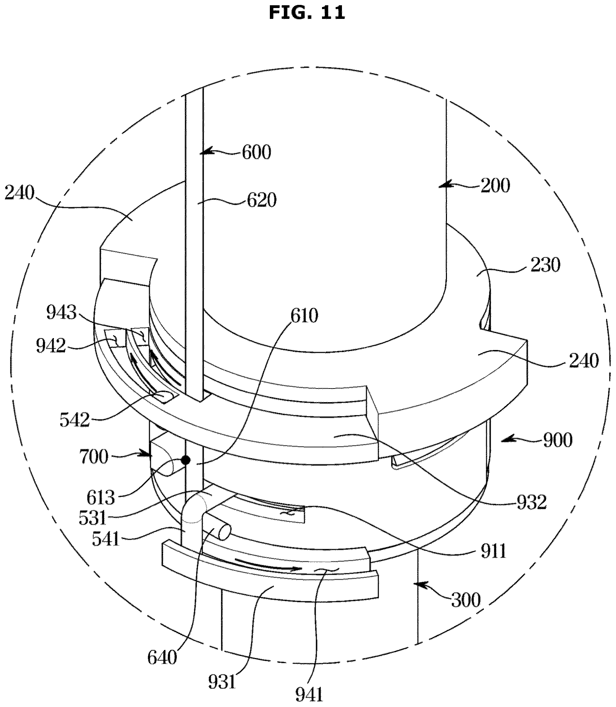

Additionally, the first leg 531 may be provided with a first leg extension portion 541 that is bent at the end tip thereof and extending toward the piston 300. The second leg 532 may be provided with a second leg extension portion 542 that is bent at the end tip thereof and extending toward the cylinder 200. This will be described in detail below with reference to FIG. 11.

In order to protect the torsion spring 500 and the friction member 400, a spring housing 900 may be provided on the outside of the torsion spring 500. The spring housing 900 may be provided at one end of the cylinder 200 on a side in which the second fixing portion 220 is not formed. The spring housing 900 may have a cylindrical shape to correspond to the shape of the piston 300. The spring housing 900 may accommodate the torsion spring 500 and the friction member 400 inside.

The torsion spring 500 and the friction member 400 are provided to be movable, and in order to prevent the movement from being hindered by the air inside the spring housing 900, the spring housing 900 may include a spring housing through hole 903 allowing communication between the spring housing 900 and the outside.

The torsion spring 500 and the friction member 400 may be required to press the piston 300 at a predetermined position. This is because the pusher 600 controlling the torsion spring 500 and the friction member 400 has a constant length, and the pusher 600 may only move within a certain range. In order to control the torsion spring 500 only by movement of the pusher 60 within the moving range, the torsion spring 500, specifically, the spring body 510, may need to be located at a certain location. For this, there is a need to include inner extension portions 620 at one end of the spring body 510 oriented toward the cylinder 200 and the other end of the spring body 510 oriented toward the piston 300 to prevent the spring 500 and the friction member 400 from being separated from a predetermined position. In other words, the inner extension portions 620 may prevent the torsion spring 500 from being separated to the outside.

The inner extension portions 620 may extend from the end of the spring housing 900 toward the inside of the spring housing 900. In this case, the inward length of the inner extension portions 620 extending inward may be deeper than the depth at which the friction member 400 is located.

The inner extension portions 620 may be formed to extend in the circumferential direction of the spring housing 900 to correspond to the shape of the torsion spring 500 and the friction member 400.

The inner extension portions 620 of the spring housing 900 may include a first inner extension portion 921 provided at an end portion oriented toward the piston 300 and a second inner extension portion 922 provided at an end portion oriented toward the cylinder 200.

On the outside of the inner extension portions 620, wings may be formed to extend in the circumferential direction of the spring housing 900. The wing provided on the outside of the first inner extension portion 921 may be referred to as a first wing 931. The wing provided on the outside of the second inner extension portion 922 may be referred to as a second wing 932. The first wing 931 and the second wing 932 may include extension portion 620 guides (FIG. 11) that guide the leg extension portions 620 that are bent and extended from the ends of the legs.

The cylinder 200 may include a plurality of wing guides 240 extending from the outside of the end portion of the cylinder 200 oriented toward the spring housing 900 in the circumferential direction of the cylinder 200. A wing groove 241 having a size corresponding to the second wing 932 may be formed between the plurality of wing guides 240. The second wing 932 may be inserted into the wing groove 241 to guide coupling of the spring housing 900 with the cylinder 200.

More specifically, the cylinder 200 may be provided on the outside of the end portion thereof oriented toward the spring housing 900 with an outer extension portion 230 that is formed to extend in the circumferential direction of the cylinder 200. The outer extension portion 230 may have an annular shape. The outside of the outer extension portion 230 may include the plurality of wing guides 240 extending in the circumferential direction of the cylinder 200. The plurality of wing guides 240 may be extended to cover only a portion of the edge of the outer extension portion 230. The plurality of wing guides 240 may protrude toward the spring housing 900 further than the outer extension portion 230 protrudes toward the spring housing 900.

Accordingly, when the spring housing 900 is coupled to the cylinder 200, the second inner extension portion 922 of the spring housing 900 may contact the outer extension portion 230. Then, the second wing 932 extending from the second inner extension portion 922 may be inserted into the wing groove 241 provided between the plurality of wing guides 240, and side surfaces of the second wing 932 may be supported by the plurality of wing guides 240. In other words, such a structure may facilitate guiding the second wing 932 being inserted into the wing groove 241.

The spring housing 900 may be divided into a first spring housing 901 and a second spring housing 902 such that the torsion spring 500 may be positioned inside the spring housing 900. Accordingly, the first spring housing 901 may include a surface facing the torsion spring 500. The second spring housing 902 may also include a surface facing the torsion spring 500. Since the piston 300 may be located inside of the torsion spring 500, the first spring housing 901 maybe considered as including a surface facing the piston 300. The second spring housing 902 may also be considered as including a surface facing the piston 300 by the same logic.

The first spring housing 901 may include the first inner extension portion 921 and the first wing 931 as described above. The second spring housing 902 may include the second inner extension portion 922 and the second wing 932. However, the disclosure is not limited thereto, and any spring housing 900, regardless whether it is the first spring housing 901 or the second spring housing 902, may include the first and second inner extension portions and the first and second wings.

Hereinafter, the configuration of the damper 100 is described in more detail.

FIG. 6 is a cross-sectional view illustrating the damper 100 of the washing machine 1 shown in FIG. 4, with the damper cut in half.

Referring to FIG. 6, the friction member 400 may be provided on the outside of the cylinder 200. The torsion spring 500 may be located on the outside of the friction member 400, and allow the friction member 400 to be pressed toward the cylinder 200. The torsion spring 500 and the friction member 400 may be surrounded by the spring housing 900.

As described above, the piston 300 may have a cylindrical shape, and a piston inner space 311 may be provided inside the piston 300.

The piston 300 may be inserted into the cylinder 200. A piston insertion portion 212 may be provided inside the cylinder 200 such that the cylinder 200 may be inserted into the cylinder 200.

The piston 300 may be inserted up to a maximum insertion length L. The maximum insertion length L may be as long as the piston body 310.

The motor 800 may be inserted into and coupled to the cylinder 200. The motor 800 may be located inward of a position at which the piston 300 may be maximally inserted into the cylinder 200 to prevent interference with the piston 300 inside the piston 300.

The pusher 600 may be located between the first leg 531 and the second leg 532 of the torsion spring 500. The pusher 600 may be coupled to the motor 800, and may include an arm coupling portion 630 rotatably coupled to the motor arm 810 including the motor arm hole 811. The arm coupling portion 630 may be provided in a shape that is bent and extended from one end of the pusher 600 toward the motor arm hole 811. Accordingly, the arm coupling portion 630 may be rotatably coupled to the motor arm 810.

The pusher 600 may allow the elastic force of the torsion spring 500 to be changed. This will be described in detail. Before describing the movement of the pusher 600, a state in which the elastic force of the torsion spring 500 changes may be described.

FIG. 7 is a graph illustrating the relationship between a damper state of the damper 100 of the washing machine 1 shown in FIG. 4 and an angular velocity of the drum.

Referring to FIG. 7, in the case of a transient state in which the rotation speed (or angular velocity) of the drum 40 increases or decreases, the damper 100 may be turned on. In the ON-state of the damper 100, the damping function may be activated and the vibration of the washing machine 1 may be reduced. In a normal state in which the rotation speed of the drum 40 is constant, the damper 100 may be turned off. In the OFF-state of the damper 100, the damping function may be deactivated, the vibration of the washing machine 1 may not be reduced, and the damper 100 may not attenuate the vibration energy of the washing machine 1.

When considering the bottom axis as the passage of time, an angular velocity of 0, that is, a state labeled as 0, indicates that the washing machine 1 is in a stopped state.

A section between 1 and 3.5 may be considered a section in which the washing is in progress.

Therefore, a section between 0 and 1 may be considered a section in which the rotation speed of the drum 40 increases upon entering the washing process. When the rotation speed of the drum 40 increases in the section entering the washing process, the damper 100 may be turned on.

In a section between 1 and 3.5, that is, a washing process section in which the rotation speed of the drum 40 is constant, the damper 100 may be turned off.

A section after ending of the washing process, that is, a section from 5 to 7 may be considered a section in which the dehydration is in progress. The rotation speed of the drum 40 required in the dehydration process may be higher than the rotation speed of the drum 40 required in the washing process.

Accordingly, the rotation speed of the drum 40 may increase upon entering the dehydration process from the washing process. That is, the damper 100 may be turned on again in the section corresponding to 3.5 to 5.

Then, in a section of 5 to 7, which is a dehydration process section in which the rotation speed of the drum 40 is constant, the damper 100 may be turned off.

The dehydration process is finished, to finally reach a stop state, denoted as 8. Therefore, in a section of 7 to 8 subsequent to the end of the dehydration process, the rotation speed of the drum 40 may decrease, and the damper 100 may be turned on.

The above description has been made in relation to the changes in the ON and OFF states of the damper 100 depending on the processes of the washing machine 1. The above processes of the washing machine 1 are only an example, and in some cases, the rotation speed of the drum 40 may be changed in more diverse ways.

However, it should be understood that changes in the ON and OFF states of the damper 100 in the present disclosure may occur in response to an increase or decrease in the rotation speed of the drum 40.

For convenience of description, the OFF state of the damper 100 may be referred to as a first state, and the ON state of the damper 100 may be referred to as a second state.

Below, changes of the state of the damper 100 changes may be described.

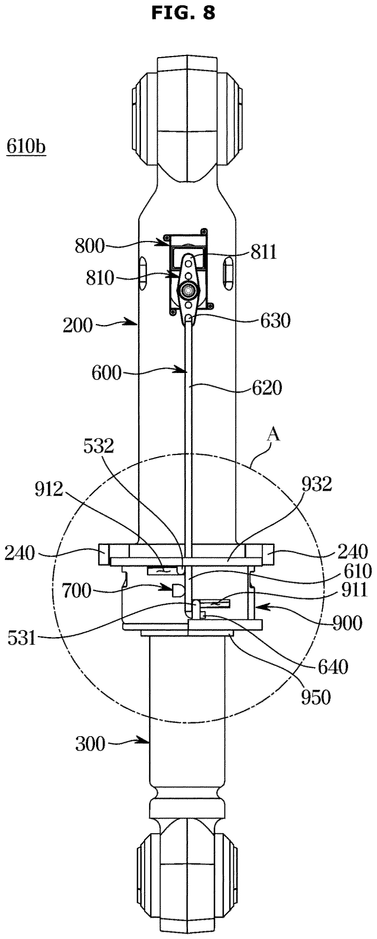

FIG. 8 is a front view illustrating the damper 100 of the washing machine of FIG. 4 in a second state.

Referring to FIG. 8, the pusher 600 may be placed between the first leg 531 and the second leg 532. The first leg 531 and the second leg 532 may be separated by the thickness of the pusher 600. The pusher 600 may be positioned in contact with the first leg 531 and the second leg 532 when the damper 100 is in the second state.

The spring housing 900 may include a supporter 700 formed on the spring housing 900 and provided between the first leg 531 and the second leg 532. The supporter 700 may be provided on the spring housing 900 protrude outwardly in the radial direction of the spring housing 900. The pusher 600 may be supported by the supporter 700 while spacing the first leg 531 and the second leg 532 from each other.

A portion of the pusher 600 corresponding to an area from a point in contact with the first leg 531 to a point in contact with the second leg 532 may be referred to as a lever portion 610. In other words, the lever portion 610 may be located between the first leg 531 and the second leg 532. The lever portion 610 may be provided to be movable to one of a first position 610a for pushing the first leg 531 and the second leg 532 such that the pressure applied by the spring body 510 to the friction member 400 is reduced and a second position 610b for releasing the first leg 531 and the second leg 532 to allow the spring body 510 to press the friction member 400.

In other words, in a transient stage in which the rotation speed of the drum 40 gradually increases or decreases, the lever portion 610 may be arranged in the second position 610b such that the torsion spring 500 is allowed to press the friction member 400, and in a normal stage in which the rotation speed of the drum 40 is maintained constant, the lever portion 610 may be arranged in the first position 610a such that the pressure applied by the torsion spring 500 to the friction member 400 is reduced.

It may be desirable for the first leg 531 and the second leg 532 to receive the same force. When the first leg 531 and the second leg 532 do not receive the same force, the torsion spring 500 may be twisted. When the torsion spring 500 is distorted, it may be difficult to apply a force evenly to the friction member 400. As a result, deformation may be made to a side of the cylinder 200 in which a greater force is applied. This may shorten the lifespan of the damper 100. When the lifespan of the damper 100 is shortened, the damper 100 needs to be replaced with a new damper 100, which may increase the overall maintenance cost of the washing machine 1.

To prevent such a limitation, the supporter 700 configured to contact the lever portion 610 may be provided between the first leg 531 and the second leg 532. The supporter 700 may be positioned between the first leg 531 and the second leg 532 such that the same force is applied to the first leg 531 and the second leg 532.

The pusher 600 may include an extension portion 620 extending from one end of the lever portion 610 toward the motor 800. The extension portion 620 may have a bar shape. Rotation of the motor 800 may be transmitted to the lever portion 610 through the extension portion 620.

The pusher 600 may include the arm coupling portion 630 at the end of the extension portion 620 to be coupled to the motor arm 810. The arm coupling portion 630 may be bent at one end of the extension portion 620 and extended to the motor arm hole 811 of the motor arm 810. Accordingly, the arm coupling portion 630 may be rotatably coupled to the motor arm 810.

The motor arm 810 may be coupled to a rotation shaft of the motor 800 and rotated by the motor 800 to move the lever portion 610 to one of the first position 610a and the second position 610b. The motor arm 810 may extend outward in the radial direction of the rotation shaft of the motor 800.

The motor arm 810 may be positioned in parallel with the longitudinal direction of the damper 100 when the lever portion 610 is in the second position 610b.

In summary, when the lever portion 610 is in the second position 610b, the torsion spring 500 presses the friction member 400 (FIG. 5), and thus the damper 100 may perform a damping function.

Additionally, the spring housing 900 may include a spring housing stepped portion 950 formed at an end oriented toward the piston 300 to enhance strength.

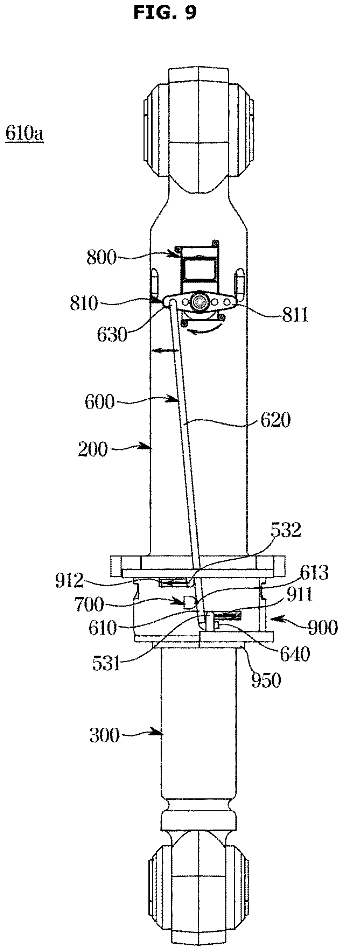

FIG. 9 is a front view illustrating the damper 100 of the washing machine 1 of FIG. 4 in a first state.

Referring to FIG. 9, the lever portion 610 may rotate on the supporter 700 to space the first leg 531 and the second leg 532 apart. In this case, the center of rotation may be a supporter contact portion 613 at which the lever contacts the supporter 700.

Due to the rotation of the lever portion 610, the first leg 531 may be moved in a direction opposite to a direction in which the first end portion (521 in FIG. 12) extends. Due to the rotation of the lever portion 610, the second leg 532 may be moved in a direction opposite to a direction in which the second end portion (522, FIG. 12) extends. The first leg 531 and the second leg 532 may move in opposite directions with respect to the supporter contact portion 613.

The spring housing 900 may include a first leg guide 911 formed to correspond to a path, along which the first leg 531 moves, and penetrated by the first leg 531 to guide the movement of the first leg 531.

The spring housing 900 may include a second leg guide 912 formed to correspond to a path, along which the second leg 532 moves, and penetrated by the second leg 533 to guide the movement of the second leg 532.

In other words, the first leg guide 911 and the second leg guide 912 may have the shape of a hole formed to pass through the spring housing 900. The holes forming the first leg guide 911 and the second leg guide 912 may be extended to correspond to the moving paths of the first leg 531 and the second leg 532.

To prevent the first leg 531 and the second leg 532 from moving and shaking, the first leg guide 911 and the second leg guide 912 may be provided with a width corresponding to the width of the first leg 531 and the second leg 532.

In order to move the lever portion 610 to the first position 610a, the motor 800 may rotate the motor arm 810. For example, the motor arm 810 may be rotated 90 degrees from the position of the motor arm 810 when the damper 100 is in the second state. Accordingly, the motor arm 810 may be positioned perpendicular to the longitudinal direction of the damper 100.

As the motor arm 810 rotates, the arm coupling portion 630 coupled to the motor arm 810 moves, the extension portion 620 coupled to the arm coupling portion 630 moves, and the lever portion 610 coupled to the extension portion 620 may move. The movement of the lever portion 610 may be supported by the supporter 700, allowing a rotational motion centered on the supporter 700 supporter.

Hereinafter, the change of the lever portion 610 from the second position 610b to the first position 610a is described in detail.

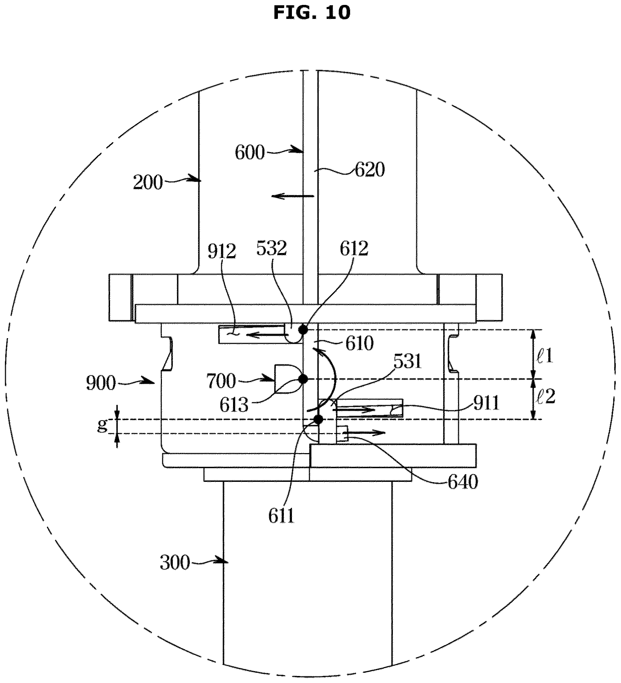

FIG. 10 is an enlarged front view illustrating part A of the damper 100 of the washing machine 1 shown in FIG. 7.

Referring to FIG. 10, the lever portion 610 rotates on the supporter contact portion 613 to move the first leg 531 and the second leg 532 away from each other.

In other words, the lever portion 610 may include a first contact portion 611 that contacts the first leg 531 to press the first leg 531 in a direction away from the second leg 532 and a second contact portion 612 that contacts the second leg 532 to press the second leg 532 in a direction away from the first leg 531.

As described above, it is desirable that the forces applied by the lever portion 610 to the first leg 531 and the second leg 532 are equal, in order to prevent the torsion spring 500 from being damaged. By minimizing a difference in moving distances of the first leg 531 and the second leg 532, the torsion spring 500 may be prevented from being distorted. Since the lever portion 610 may rotate on the supporter contact portion 613, and the first leg 531 and the second leg 532 may move by a length in proportion to the distance from the supporter contact portion 613, it is desirable to set a first distance 11 between the supporter 700 and the first leg 531 and a second distance 11 between the supporter 700 and the second leg 532 to be equal.

The pusher 600 may include a bent portion 640 that is bent at one end of the lever portion 610 adjacent to the first leg 531 of the lever portion 610 and extended between the first leg extension portion 541 and the spring housing 900. More specifically, the bent portion 640 may be located between the first wing 931 and the first leg 531. The bent portion 640 may prevent the pusher 600 from escaping between the first leg 531 and the second leg 532. Without the bent portion 640, the pusher 600 may escape in the circumferential direction of the spring housing 900 or in the radial direction. When the pusher 600 attempt to escape in the radially outer direction of the spring housing 900, the bent portion 640 of the pusher 600 may contact the first leg extension portion 541, thereby preventing the pusher 600 from escaping.

A movement gap g may be provided between the bent portion 640 of the pusher 600 and the first leg 531. The pusher 600 may be moved by rotation of the motor arm 810. The pusher 600 may be moved toward the cylinder 200 according to the rotation of the motor arm 810. In this case, without the movement gap g between the first leg 531 and the bent portion 640 of the pusher 600, the pusher 600 may press the torsion spring 500 toward the cylinder 200 in a process of the damper 100 entering the second state. Alternatively, the pusher 600 may fail to move by being caught in the torsion spring 500. To prevent such a limitation, the movement gap g may be provided between the bent portion 640 of the pusher 600 and the first leg 531.

In other words, for the pusher 600 to be movable in the direction of the cylinder 200 when the lever portion 610 moves from the second position 610b to the first position 610a, the movement gap g may be included between the first leg 531 and the bent portion 640

Additionally, the supporter 700 may have a curved shape on a surface facing the pusher 600. This is because the supporter 700 serves to support the movement of the pusher 600 while making contact with the pusher 600, and when the pusher 600 rotates on the supporter 700, the pusher 600 may move while rotating along the surface of the supporter 700 facing the pusher 600. In order not to interfere with the movement, the surface of the supporter 700 facing the pusher 600 may be curved.

FIG. 11 is an enlarged perspective view of the damper 100 of the washing machine 1 shown in FIG. 9, which is viewed at a different angle from that of FIG. 9.

Referring to FIG. 11, the first wing 931 may include the first extension portion guide 941 to guide the movement of the first leg extension portion 541. The first extension portion guide 941 may have the shape of a groove or a hole. For convenience of description below, the first extension portion guide 941 may be described as having the shape of a groove. The first extension portion guide 941 may be shaped like a groove into which at least a portion of the first leg extension portion 541 is inserted. Since the first leg extension portion 541 moves in the circumferential direction of the spring housing 900, the first extension portion guide 941 may be provided in a shape corresponding thereto. The first leg extension portion 541 may be stably moved by the first extension portion guide 941.

The second wing 932 may include the second extension portion guide 942 to guide the movement of the second leg extension portion 542. The second extension portion guide 942 may have the shape of a groove or a hole. For convenience of description below, the second extension portion guide 942 may be described as having the shape of a groove. The second extension portion guide 942 may be shaped like a groove into which at least a portion of the second leg extension portion 542 is inserted. Since the second leg extension portion 542 moves in the circumferential direction of the spring housing 900, the second extension portion guide 942 may be provided in a shape corresponding thereto.

Since the second wing 932 may have a shape corresponding to the wing groove 241 provided by the plurality of wing guides 240, the second extension portion guide 942 may be formed in a part of the second wing 932.

The extension portion 620 of the pusher 600 may be connected to the lever portion 610 while penetrating the second wing 932. When the lever portion 610 moves from the second position 610b to the first position 610a, the extension portion 620 also moves, and thus a third extension portion guide 943 may be provided to guide the extension portion 620. The third extension portion guide 943 may be provided in the shape of a hole on the second wing 932. The third extension portion guide 943 may be in the shape of a hole extending in the circumferential direction of the spring housing 900 along the path in which the extension portion 620 moves.

As discussed above, the main components that enable the damper 100 to perform damping are the friction member 400, the elastic member 500, and the pusher 600. The components will be described below.

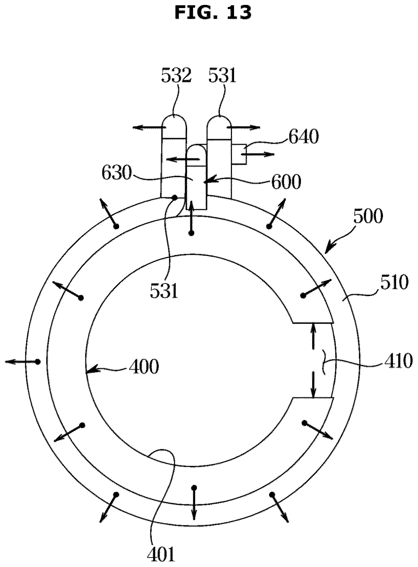

FIG. 12 is a perspective view illustrating only the friction member 400, the elastic member 500, and the pusher 600 in the damper 100 of the washing machine 1 of FIG. 4. FIG. 13 is a top plan view of the friction member 400, the elastic member 500, and the pusher 600 of FIG. 11.

Referring to FIGS. 12 and 13, a movement of the lever portion 610 from the second position 610b to the first position 610a may cause the elastic member 500 to expand outward.

The friction member 400 may be provided in a "C" shape without completely covering the cylinder 200. Compared to when the friction member 400 is in the shape of a ring, the space formed in the area not covered by the ring may be referred to as a contraction space 410.

The movement of the lever portion 610 from the second position 610b to the first position 610a may cause the contraction space 410 to expand. As a result, the cylinder 200 in contact with the friction member 400 may undergo less friction.

The inside of the friction member 400 may be coated with a lubricant to smooth the relative movement with the cylinder 200.

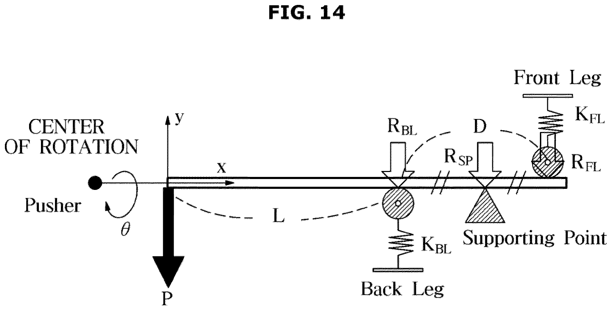

FIG. 14 is a conceptual diagram to describe the operating principle of the damper 100 of the washing machine 1 of FIG. 7.

Referring to FIG. 14, the pusher 600 moves similar to a lever.

"P" shown on the left of the drawing represents a force exerted by the motor 800.

Back leg located in the center represents the second leg 532. Front Leg located at the right end represents the first leg 531. Supporting point represents the supporter 700.

The elastic modulus of the Back leg may be denoted as $K_{BL}$, and the elastic modulus of the Front leg may be denoted $K_{FL}$. For example, the distance from the supporting point to the Back leg and the distance from the supporting point to the Front leg may be the same, in which case, when the y-direction movement amount of the Back leg is $\Delta y$, the y-direction movement amount of the Front leg may also be $\Delta y$.

The distance from the motor arm 810 to the Back leg may be denoted as L. The distance from the Back leg to the Front leg may be denoted as D.

The force exerted on the pusher 600 by the Back leg is $R_{BL} = -K_{BL}\Delta y$, given by F=kx. The force exerted on the pusher 600 by the Front leg is $R_{FL} = K_{FL}\Delta y$.

When the force exerted on the pusher 600 by the Supporting Point is $R_{SP}$, the equation below may be satisfied using the force equilibrium equation.

The equation below may be satisfied using the force equation.

$$(1) \quad P + R_{SP} + R_{FL} + R_{BL} = 0$$

The equation below may be satisfied using the moment equation.

$$(2) \text{ at } x=0,$$

$$-R_{BL}L - R_{SP}\left(L + \frac{D}{2}\right) - R_{FL}(L + D) = 0$$

$$(3) \text{ At } x=L+D,$$

$$P(L + D) + R_{BL}D + R_{SP}\frac{D}{2} = 0$$

The forces exerted by the Back leg and the Front leg are calculated as:

$$R_{BL} = -K_{BL}\Delta y$$

$$R_{FL} = -K_{FL}\Delta y$$

Here, eliminating $\Delta y$ and $R_{SP}$ yields:

$$R_{BL} = -\frac{K_{BL}}{K_{BL} + K_{FL}}\frac{2L + D}{D}P$$

$$R_{FL} = -\frac{K_{FL}}{K_{BL} + K_{FL}}\frac{2L + D}{D}P$$

$$\therefore \frac{R_{FL}}{R_{BL}} = -\frac{K_{FL}}{K_{BL}}$$

$$\therefore \frac{R_{FL}}{P} = \frac{K_{FL}}{K_{BL} + K_{FL}}\frac{2L + D}{D}$$

Below, the final equation is plotted on a graph.

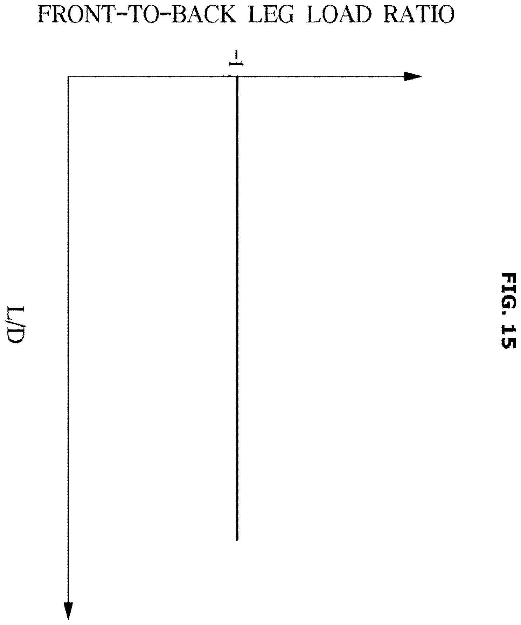

FIG. 15 is a graph illustrating the relationship between LID and the front-to-back leg load ratio shown in FIG. 13.

Referring to FIG. 15, it can be seen that regardless of L/D, the ratio of loads of the front leg and the rear leg is constant at -1. This indicates that equal forces act on the first leg 531 and the second leg 532 according to the structure of the present disclosure.

As described above, the fact that equal forces acting on the first leg 531 and the second leg 532 is taken to mean that it does not cause distortion in the torsion spring 500, thereby providing a stable damper 100.

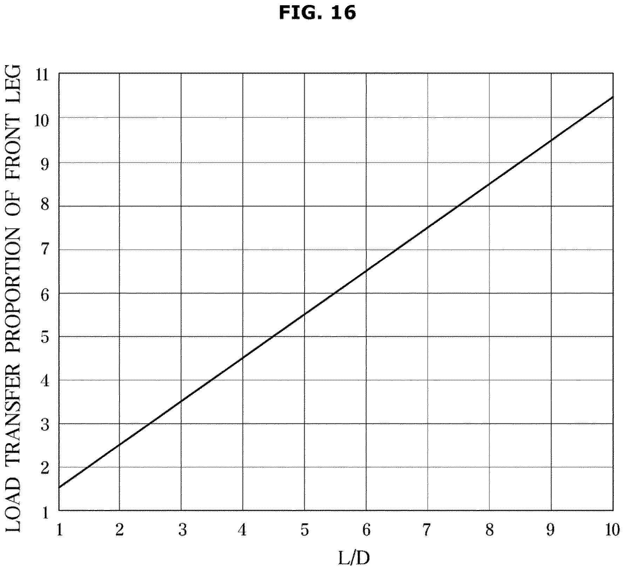

FIG. 16 is a graph illustrating the relationship between LID and the load transfer proportion of the front leg shown in FIG. 13.

Referring to FIG. 16, it can be seen that the larger L/D, the stronger force is applied to the front leg. In other words, the farther the distance between the motor 800 and the second leg 532, the more powerful force may be transmitted using the motor 800 that produces the same force, enabling efficient control. Also, the closer the first leg 531 and the second leg 532 are, the more efficient control is possible for the same reasons as above.

The model is simulated to verify whether it functions as intended in practice.

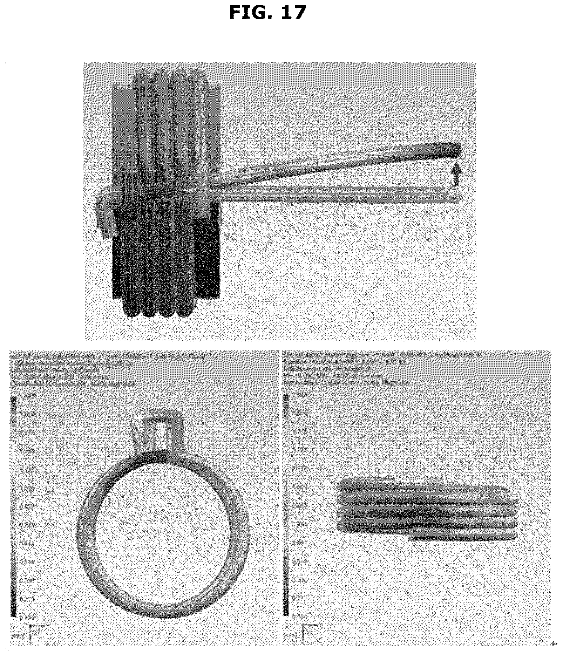

FIG. 17 is a diagram illustrating a result of simulation experiments to verify an operation of the damper 100 of the washing machine 1 shown in FIG. 4.

Referring to FIG. 17, the torsion spring 500 according to the present disclosure and the surrounding environment thereof were modeled and whether it functions was verified through MSC ADAMS. Simulations were conducted with damper coefficients of 0.1 and 0.5, and it were confirmed that it operated normally.

As described above, the pusher 600 is controlled by the motor 800. Hereinafter, a method of controlling the pusher 600 by the motor 800 is described.

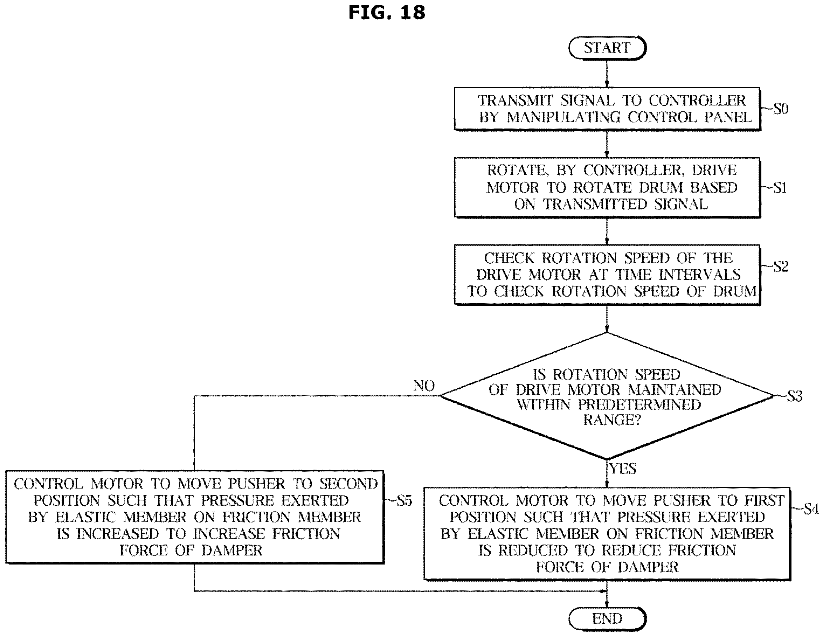

FIG. 18 is a flow chart illustrating the sequences of the states of the damper 100 of the washing machine 1 shown in FIG. 4.

First, when the washing machine 1 is turned on, the user may manipulate the control panel 13 to transmit an instruction that the washing machine 1 performs a certain process.

When the corresponding instruction is transmitted to the controller (830 in FIG. 4) that controls the drive motor (50, in FIG. 2) that rotates the drum 40, the controller (830 in FIG. 4) may rotate the drive motor 50 to rotate the drum 40.

In order to measure the rotation speed of the drum, the rotation speed of the drive motor 50 may be measured, and an input signal to the drive motor 50 may be received. The drive motor 50 may include a component for measuring the rotation speed, such as an encoder, etc. The component for measures the rotation speed may measure the rotation speed of the drive motor, and transmit a signal to the controller.

In order to measure changes in the rotation speed of the drum 40, the controller 830 may measure the rotation speed of the drive motor 50 at time intervals. In this case, the controller 830 may check whether the rotation speed of the drive motor 50 remain constant within a predetermined range.

When the rotation speed of the drive motor 50 remains constant within the predetermined range, indicating a normal state, the motor may be controlled for the pusher 600 to move to the first position 610a such that the pressure exerted by the elastic member 500 on the friction member 400 is released to reduce the friction force of the damper 100.

In other words, the controller may allow the first motor 800, which controls the pusher 600, to move the lever portion 610 of the pusher 600 to the first position 610a for pressing the first leg 531 and the second leg 532 such that the pressure exerted by the spring body 510 on the friction member 400 is reduced.

In a transient state in which the rotation speed of the drive motor 50 varies outside the predetermined range, the motor may be controlled for the pusher 600 to be moved to the second position 610b in which the pressure exerted by the elastic member 500 on the friction member 400 increases and thus the friction force of the damper 100 increases.

In other words, the first motor 800 may move the lever portion 610 of the pusher 600 to the second position 610b for releasing the first leg 531 and the second leg 532 such that the spring body 510 presses the friction member 400.

That is, in the method of controlling the washing machine 1 including the damper 100 provided to reduce vibration transmitted from the drum 40 and the first motor 800 provided to adjust the friction force of the damper 100, the rotation speed of the drum 40 is checked (S3), and in a transient state in which the rotation speed of the drum 40 gradually increases or gradually decreases, the first motor 800 may be controlled to increase the friction force of the damper 100 (S5), and in a normal state in which the rotation speed of the drum 40 is maintained within a predetermined range, the first motor 800 may be controlled to reduce the friction force of the damper 100 (S4).

In this case, a method of controlling the damper of the washing machine, which is a method for increasing or decreasing a friction force of the damper 100, may be achieved by the pusher 600 capable of expanding or contracting the torsion spring 500 for adjusting the friction force of the friction member 400.

A method of controlling the motor 800 by the controller 830 may be achieved through a closed loop system. In other words, the state of the damper 100 may be checked using a sensor (not shown), and the damper 100 may be controlled by providing feedback based on the state.

However, since the closed-loop system method is slower than an open-loop system method and may incur higher costs, the disclosure assumes the open-loop system method for description.

In other words, in order to control the damper 100, the controller 830 receives a signal from the drive motor 50 and performs control, different from a method using a sensor for checking the state of the damper 100.

Hereinafter, a state in which the motor 800 that performs such control is included in the damper 100 is described.

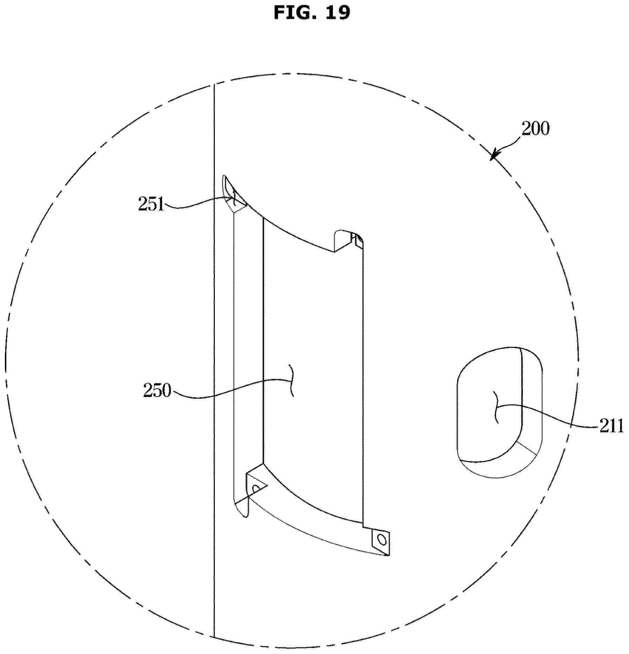

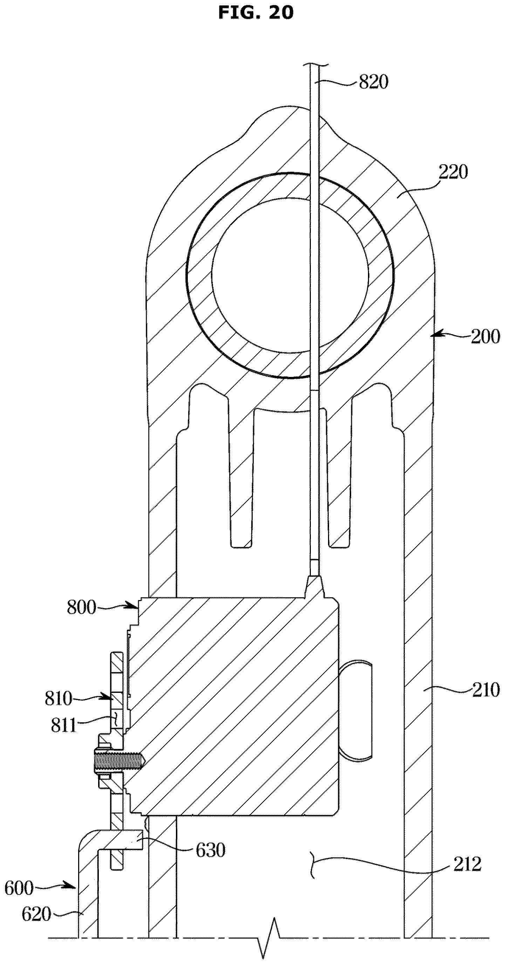

FIG. 19 is an enlarged perspective view illustrating part B of FIG. 5, which shows a motor insertion hole 250 in detail. FIG. 20 is an enlarged cross-sectional view of part B shown in FIG. 5, which is cut in half to show the motor insertion hole 250 in detail.

Referring to FIGS. 19 and 20, the motor 800 may be coupled to the cylinder 200 through the motor insertion hole 250 provided in the cylinder 200.

Since the motor arm 810 coupled to the rotation shaft of the motor 800 needs to be provided on the outside of the cylinder 200 to make contact with the first leg 531 and the second leg 532, at least a portion of the motor 800 needs to be located outside the cylinder 200. To this end, the motor 800 may include a locking protrusion 801 that protrudes in a lateral direction.

The cylinder 200 may include a motor locking groove 251 recessed inward of the cylinder 200 from an inner periphery of the motor insertion hole 250 and having a size corresponding to the locking protrusion 801, to prevent the motor 800 from inwardly passing through the cylinder 200.

The locking protrusion 801 may include a total of four locking protrusions 801, one each on the front, left, and right sides of the motor 800. Accordingly, the motor locking groove 251 may also be formed as four motor locking grooves 251 correspondingly thereto.

When the locking protrusion 801 is inserted into the locking groove, a screw may be inserted in the direction from the locking protrusion 801 toward the motor locking groove 251, thereby coupling the motor 800 and the cylinder 200 to each other.

The motor 800 may be connected to a motor wire 820 for connection with an external power source. The motor wire 820 may be oriented to the outside of the damper 100 through the second fixing portion 220 of the cylinder 200.

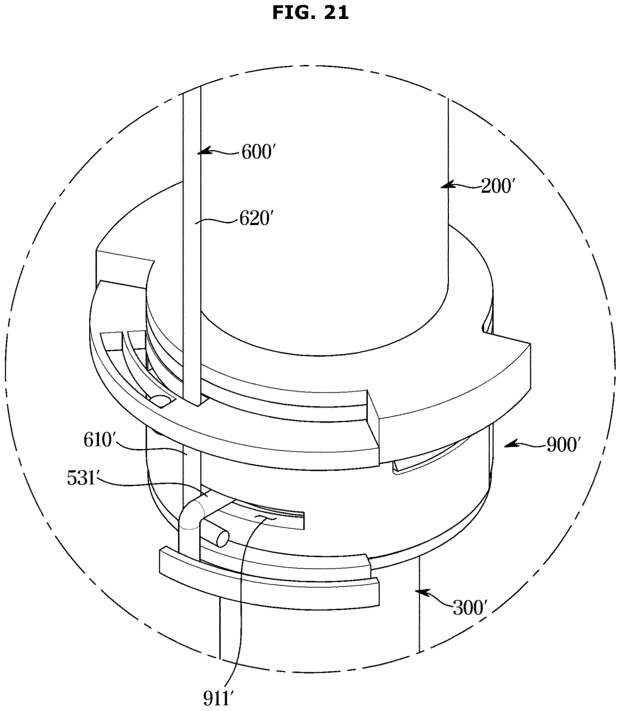

FIG. 21 is an enlarged perspective view illustrating a damper 100' of a washing machine 1 according to an embodiment of the present disclosure.

Referring to FIG. 21, the damper 100' may not include a supporter.

The supporter may have a shape protruding to the outside of a spring housing 900', and thus without a supporter, the manufacturing complexity may be reduced.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1. A washing machine comprising:

   a case;
   a tub located inside the case;
   a drum rotatably provided inside the tub; and
   a damper provided between the case and the tub and configured to reduce vibration transmitted from the drum to the case,
   wherein the damper includes:

      a cylinder coupled to one of the case and the tub;
      a piston having at least a portion movably inserted into the cylinder, and coupled to another one of the case and the tub;
      a friction member provided to cover at least a portion of an outer peripheral surface of the piston;
      an elastic member surrounding the friction member, and having an inner periphery that is reduced to apply an elastic force the friction member, allowing the friction member to be pressed toward the piston; and
      a pusher in contact with the elastic member, the pusher configured to space the elastic member from the cylinder to reduce the elastic force applied by the elastic member to the friction member.

2. The washing machine of claim 1, wherein the elastic member includes a torsion spring, and

   the torsion spring includes

      a cylindrical spring body surrounding the friction member to press the friction member;
      a first leg bent at a first end, which is one end of the spring body, and extending in a radially outward direction of the spring body; and
      a second leg bent at a second end, which is an other end of the spring body, and extending in the radially outward direction of the spring body,

   wherein the pusher includes a lever portion located between the first leg and the second leg, the lever portion configured to be movable between a first position for pressing the first leg and the second leg to reduce a pressure applied by the spring body to the friction member and a second position for releasing the first leg and the second leg for the spring body to apply a pressure to the friction member.

3. The washing machine of claim 2, wherein the damper further includes a supporter configured to contact the lever portion between the first leg and the second leg to support the lever.

4. The washing machine of claim 3, wherein a first distance between the supporter and the first leg is equal to a second distance between the supporter and the second leg.

5. The washing machine of claim 3, wherein the lever portion includes:

   a first contact portion configured to contact the first leg to press the first leg in a direction away from the second leg;
   a second contact portion configured to contact the second leg to press the second leg in a direction away from the first leg; and
   a supporter contact portion configured to contact the supporter.

6. The washing machine of claim 2, wherein the damper further includes a motor configured to rotate the pusher, and a motor arm coupled to a rotation shaft of the motor and rotated by the motor to move the lever portion to one of the first position and the second position, the motor arm extending in a radially outward direction of the rotation axis of the motor, wherein the pusher includes:

   an extension portion extending from one end of the lever portion toward the motor arm; and
   an arm coupling portion at an end of the extension portion configured to be coupled to the motor arm.

7. The washing machine of claim 2, wherein in a transient stage in which a rotation speed of the drum gradually increases or decreases, the lever portion is disposed in the second position such that the torsion spring exerts a pressure on the friction member, and
   in a normal stage in which the rotation speed of the drum remains constant, the lever portion is disposed in the first position such that a pressure exerted on the friction member by the torsion spring is reduced.

8. The washing machine of claim 6, further comprising a spring housing provided outside the torsion spring to protect the torsion spring, the spring housing having an inner extension portion to prevent the torsion spring from being separated to an outside,
   wherein the spring housing includes a first spring housing including a surface facing the piston, and a second spring housing that is coupleable to the first spring housing and including a surface facing the piston such that the torsion spring is assembled inside the spring housing.

9. The washing machine of claim 8, wherein the spring housing includes:

a first leg guide formed to correspond to a path, along which the first leg moves, to guide a movement of the first leg, and allowing the first leg to pass therethrough; and
a second leg guide formed to correspond to a path, along which the second leg moves, to guide a movement of the second leg, and allowing the second leg to pass therethrough.

10. The washing machine of claim 8, wherein the torsion spring include:

a first leg extension portion bent at an end of the first leg and extending toward the piston; and
a second leg extension portion bent at an end of the second leg and extending toward the cylinder,
wherein the spring housing includes:

a first wing extending from one end of the spring housing in a radially outward direction, and including a first extension portion guide to guide the first leg extension portion; and
a second wing extending from an other end of the spring housing in a radially outward direction, and including a second extension portion guide to guide the second leg extension portion.

11. The washing machine of claim 10, wherein the torsion spring includes:

a first leg extension portion bent at an end of the first leg and extending toward the piston; and
a second leg extension portion bent at an end of the second leg and extending toward the cylinder,
wherein the pusher further includes a bent portion bent at one end of the lever portion adjacent to the first leg, and extending between the first leg extension portion and the spring housing.

12. The washing machine of claim 11, wherein the bent portion extends to include a movement gap between the first leg and the bent portion such that the pusher is movable in a direction toward the cylinder when the lever portion moves from the second position to the first position.

13. The washing machine of claim 10, wherein the second wing is formed to extend from an end of the spring housing oriented toward the cylinder in a circumferential direction of the spring housing, and the cylinder includes:

a plurality of wing guides extending from an outer side of an end portion of the cylinder oriented toward the spring housing in a circumferential direction of the cylinder; and
a wing groove formed between the plurality of wing guides and having a size corresponding to the second wing.

14. The washing machine of claim 6, wherein the motor includes a locking protrusion protruding in a lateral direction, and
the cylinder includes:

an insertion hole into which the motor is inserted; and
a locking groove at an inner periphery of the insertion hole, recessed inward of the cylinder and having a size corresponding to the locking protrusion to prevent the motor from passing through the cylinder.

15. The washing machine of claim 14, wherein the motor is located inward of a position at which the piston is maximally inserted in the cylinder to prevent the motor from interfering with the piston inside the piston.

# FIG. 1

# FIG. 2

# FIG. 3

**FIG. 4**

# FIG. 5

**FIG. 6**

# FIG. 7

**FIG. 8**

**FIG. 9**

**FIG. 10**

**FIG. 11**

**FIG. 12**

## FIG. 13

**FIG. 15**

**FIG. 16**

**FIG. 17**

**FIG. 18**

```
                    ( START )
                        |
                        v
        +-------------------------------+
        | TRANSMIT SIGNAL TO CONTROLLER |~S0
        | BY MANIPULATING CONTROL PANEL |
        +-------------------------------+
                        |
                        v
        +-------------------------------+
        | ROTATE, BY CONTROLLER, DRIVE  |
        | MOTOR TO ROTATE DRUM BASED    |~S1
        | ON TRANSMITTED SIGNAL         |
        +-------------------------------+
                        |
                        v
        +-------------------------------+
        | CHECK ROTATION SPEED OF THE   |
        | DRIVE MOTOR AT TIME INTERVALS |~S2
        | TO CHECK ROTATION SPEED OF DRUM|
        +-------------------------------+
                        |
                        v
                   IS ROTATION SPEED
         NO       OF DRIVE MOTOR MAINTAINED   ~S3
    <------------    WITHIN PREDETERMINED
    |               RANGE?
    |                    |
    |                   YES
    |                    v
+----------------------------+   +----------------------------+
| CONTROL MOTOR TO MOVE      |   | CONTROL MOTOR TO MOVE      |
| PUSHER TO SECOND           |   | PUSHER TO FIRST           |
| POSITION SUCH THAT         |~S5| POSITION SUCH THAT        |~S4
| PRESSURE EXERTED BY        |   | PRESSURE EXERTED BY        |
| ELASTIC MEMBER ON FRICTION |   | ELASTIC MEMBER ON FRICTION |
| MEMBER IS INCREASED TO     |   | MEMBER IS REDUCED TO       |
| INCREASE FRICTION FORCE    |   | REDUCE FRICTION FORCE      |
| OF DAMPER                  |   | OF DAMPER                  |
+----------------------------+   +----------------------------+
    |                                    |
    +----------------+-------------------+
                     v
                  ( END )
```

EP 4 438 789 A1

**FIG. 19**

## FIG. 20

## FIG. 21

<table>
<tr><td colspan="2">**INTERNATIONAL SEARCH REPORT**</td><td>International application No.<br>**PCT/KR2023/000105**</td></tr>
</table>

**A.    CLASSIFICATION OF SUBJECT MATTER**

**D06F 37/22**(2006.01)i; **D06F 37/26**(2006.01)i; **D06F 39/12**(2006.01)i; **F16F 7/09**(2006.01)i; **F16F 15/04**(2006.01)i; **D06F 37/30**(2006.01)i

According to International Patent Classification (IPC) or to both national classification and IPC

**B.    FIELDS SEARCHED**

Minimum documentation searched (classification system followed by classification symbols)

D06F 37/22(2006.01); D06F 37/30(2006.01); D06F 39/00(2006.01); D06F 39/12(2006.01); F16F 7/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 세탁기(washing machine), 댐퍼(damper), 실린더(cylinder), 피스톤(piston), 마찰부재(friction element), 탄성부재(spring), 푸셔(pusher)

**C.    DOCUMENTS CONSIDERED TO BE RELEVANT**

| Category* | Citation of document, with indication, where appropriate, of the relevant passages | Relevant to claim No. |
|---|---|---|
| A | KR 10-1177567 B1 (SUSPA GMBH) 27 August 2012 (2012-08-27)<br>See paragraphs [0026], [0029]-[0030] and [0035] and figures 1-2. | 1-15 |
| A | KR 20-0124321 Y1 (SAMSUNG ELECTRONICS CO., LTD.) 01 May 1999 (1999-05-01)<br>See paragraphs [0003]-[0004], claim 1 and figures 1-5b. | 1-15 |
| A | JP 2003-159494 A (HITACHI LTD.) 03 June 2003 (2003-06-03)<br>See paragraph [0008] and figure 1. | 1-15 |
| A | KR 10-0595563 B1 (LG ELECTRONICS INC.) 03 July 2006 (2006-07-03)<br>See paragraph [0066] and figures 4-5. | 1-15 |
| A | KR 10-1772082 B1 (LG ELECTRONICS INC.) 12 September 2017 (2017-09-12)<br>See paragraphs [0038]-[0039] and figure 3. | 1-15 |

☐ Further documents are listed in the continuation of Box C.    ☑ See patent family annex.

| | |
|---|---|
| \*    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **26 April 2023** | **26 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/000105**

| Patent document cited in search report | | | Publication date (day/month/year) | Patent family member(s) | | | Publication date (day/month/year) |
|---|---|---|---|---|---|---|---|
| KR | 10-1177567 | B1 | 27 August 2012 | AT | 480657 | T | 15 September 2010 |
| | | | | CN | 1657799 | A | 24 August 2005 |
| | | | | CN | 1657799 | C | 05 November 2008 |
| | | | | DE | 102005005177 | A1 | 01 September 2005 |
| | | | | EP | 1584730 | A2 | 12 October 2005 |
| | | | | EP | 1584730 | A3 | 12 November 2008 |
| | | | | EP | 1584730 | B1 | 08 September 2010 |
| | | | | JP | 2005-233425 | A | 02 September 2005 |
| | | | | JP | 4510664 | B2 | 28 July 2010 |
| | | | | KR | 10-1177678 | B1 | 28 August 2012 |
| | | | | KR | 10-2012-0079031 | A | 11 July 2012 |
| | | | | MX | PA05001868 | A | 26 March 2007 |
| | | | | PL | 1584730 | T3 | 31 March 2011 |
| | | | | RU | 2005104271 | A | 27 July 2006 |
| | | | | RU | 2369785 | C2 | 10 October 2009 |
| | | | | US | 2005-0183912 | A1 | 25 August 2005 |
| | | | | US | 7341132 | B2 | 11 March 2008 |
| KR | 20-0124321 | Y1 | 01 May 1999 | CN | 1137588 | A | 11 December 1996 |
| | | | | CN | 1137588 | C | 10 December 1996 |
| | | | | JP | 08-229295 | A | 10 September 1996 |
| | | | | JP | 2693142 | B2 | 24 December 1997 |
| | | | | KR | 20-1996-0028989 | U | 17 September 1996 |
| | | | | US | 5836556 | A | 17 November 1998 |
| JP | 2003-159494 | A | 03 June 2003 | None | | | |
| KR | 10-0595563 | B1 | 03 July 2006 | KR | 10-2006-0006602 | A | 19 January 2006 |
| KR | 10-1772082 | B1 | 12 September 2017 | KR | 10-2013-0002113 | A | 07 January 2013 |

Form PCT/ISA/210 (patent family annex) (July 2022)